# EUROPÄISCHE PATENTANMELDUNG

(11) **EP 4 300 316 A1**
(43) Veröffentlichungstag der Anmeldung: **03.01.2024**
(21) Anmeldenummer: 22182519.3
(22) Anmeldetag: 01.07.2022
(51) Int. Cl.: G06F 11/36

(54) **COMPUTERIMPLEMENTIERTES VERFAHREN UND SYSTEM ZUM ERSTELLEN EINER SZENARIEN-BIBLIOTHEK**

(71) Anmelder: dSPACE GmbH, 33102 Paderborn (DE)
(72) Erfinder: Wiegand, Christopher, 33102 Paderborn (DE)

(57) **Zusammenfassung**

Die Erfindung betrifft ein computerimplementiertes Verfahren und System (1) zum kriterienbasierten Erstellen einer, virtuelle Fahrzeugumgebungen aufweisenden, Szenarien-Bibliothek (10) zum Testen hochautomatisierter Fahrfunktionen eines Kraftfahrzeugs, umfassend ein Vergleichen (S2) eines, eine Mehrzahl von Szenario-Elementen (14) aufweisenden, weiteren Test-Szenario-Datensatzes (18) mit zumindest einem Cluster der durch die Szenarien-Bibliothek (10) umfassten Anzahl von Test-Szenario-Datensätzen (12) und dem Anforderungsprofil (16) zum Erstellen der Szenarien-Bibliothek (10), wobei der Vergleich ein Anwenden (S3) eines Algorithmus (A) zum Clustern von Szenario-Elementen (14) auf die durch die Szenarien-Bibliothek (10) umfasste Anzahl von Test-Szenario-Datensätzen (12) und den weiteren Test-Szenario-Datensatz (18) aufweist.

## Beschreibung

Die vorliegende Erfindung betrifft ein computerimplementiertes Verfahren zum kriterienbasierten Erstellen einer, virtuelle Fahrzeugumgebungen aufweisenden, Szenarien-Bibliothek zum Testen hochautomatisierter Fahrfunktionen eines Kraftfahrzeugs.

Die Erfindung betrifft ferner ein System zum kriterienbasierten Erstellen einer, virtuelle Fahrzeugumgebungen aufweisenden, Szenarien-Bibliothek zum Testen hochautomatisierter Fahrfunktionen eines Kraftfahrzeugs.

### Stand der Technik

Ziel bei der Entwicklung und dem virtuellen Testen hochautomatisierter Fahrfunktionen eines Kraftfahrzeugs ist es, eine möglichst exakte Abdeckung sämtlicher, im realen Straßenverkehr auftretenden Fahrsituationen zu erreichen.

Der erste Schritt bei der Festlegung der Fähigkeiten eines automatisierten Fahrsystems ist daher die Definition ihres Einsatzbereichs (Operational Design Domain, ODD). Die ODD stellt die Betriebsumgebung dar, in der ein automatisiertes Fahrsystem eine dynamische Fahraufgabe sicher durchführen kann. Somit ist es erforderlich, eine Taxonomie für die Definition des ODD für ein bestimmtes automatisiertes Fahrsystem zu definieren.

Virtuelle Testszenarien, die für die Bewertung des automatisierten Fahrsystems als Teil eines Sicherheitsnachweises verwendet werden, können daher aus der ODD-Definition des automatisierten Fahrsystems abgeleitet werden.

Um eine möglichst exakte Testabdeckung der ODD-Taxonomie zu erreichen, ist es somit erforderlich, eine Bibliothek zu erstellen, welche eine ausreichende Anzahl von Datensätzen virtueller Testszenarien umfasst.

Betrachtet man nun eine Menge von Szenarien und möchte neu erstellte Szenarien einfügen, ist es schwer zu entscheiden, ob ein solches Szenario schon in der Bibliothek enthalten ist. Weiter ist auch unklar, wie wichtig dieses Szenario im Kontext der Absicherung ist. Wie viel neuen Informationsgehalt dieses Szenario dann liefert und wie viel neuen Wert es liefert, ist jedoch entscheidend darüber, ob dieses Szenario in die Bibliothek aufgenommen werden soll.

Demzufolge besteht ein Bedarf, bestehende Verfahren und Systeme zum Erstellen einer, virtuelle Fahrzeugumgebungen aufweisenden, Szenarien-Bibliothek zum Testen hochautomatisierter Fahrfunktionen eines Kraftfahrzeugs dahingehend zu verbessern, dass die Szenarien-Bibliothek eine optimale Testabdeckung der ODD-Taxonomie bei effizienter Nutzung von Rechen- und/oder Speicherressourcen ermöglicht.

Es ist daher Aufgabe der Erfindung, ein computerimplementiertes Verfahren und System zum kriterienbasierten Erstellen einer, virtuelle Fahrzeugumgebungen aufweisenden, Szenarien-Bibliothek zum Testen hochautomatisierter Fahrfunktionen eines Kraftfahrzeugs bereitzustellen, welche die Erstellung einer, eine optimale Testabdeckung der ODD-Taxonomie, aufweisende Szenarien-Bibliothek ermöglichen.

### Offenbarung der Erfindung

Die Aufgabe wird erfindungsgemäß gelöst durch ein computerimplementiertes Verfahren zum kriterienbasierten Erstellen einer, virtuelle Fahrzeugumgebungen aufweisenden, Szenarien-Bibliothek zum Testen hochautomatisierter Fahrfunktionen eines Kraftfahrzeugs.

Das Verfahren umfasst ein Bereitstellen einer, eine Anzahl von Test-Szenario-Datensätzen aufweisenden Szenarien-Bibliothek und eines Szenario-Elemente aufweisenden Anforderungsprofils zum Erstellen der Szenarien-Bibliothek sowie ein Vergleichen eines, eine Mehrzahl von Szenario-Elementen aufweisenden, weiteren Test-Szenario-Datensatzes mit zumindest einem Cluster der durch die Szenarien-Bibliothek umfassten Anzahl von Test-Szenario-Datensätzen und dem Anforderungsprofil zum Erstellen der Szenarien-Bibliothek.

Der Vergleich umfasst ein Anwenden eines Algorithmus zum Clustern von Szenario-Elementen auf die durch die Szenarien-Bibliothek umfasste Anzahl von Test-Szenario-Datensätzen und den weiteren Test-Szenario-Datensatz. Die Ausgabedaten des Algorithmus sind hierbei zumindest ein Cluster von Szenario-Elementen.

Ferner umfasst das Verfahren ein Aufnehmen des weiteren Test-Szenario-Datensatzes in die Szenarien-Bibliothek oder Verwerfen des weiteren Test-Szenario-Datensatzes in Abhängigkeit eines Grades einer Übereinstimmung des zumindest einen Clusters des weiteren Test-Szenario-Datensatzes mit den Szenario-Elementen des Anforderungsprofils und dem zumindest einem Cluster der durch die Szenarien-Bibliothek umfassten Anzahl von Test-Szenario-Datensätzen.

Die Erfindung betrifft des Weiteren ein System zum kriterienbasierten Erstellen einer, virtuelle Fahrzeugumgebungen aufweisenden, Szenarien-Bibliothek zum Testen hochautomatisierter Fahrfunktionen eines Kraftfahrzeugs.

Das System umfasst eine, eine Anzahl von Test-Szenario-Datensätzen aufweisende Szenarien-Bibliothek und ein Szenario-Elemente aufweisendes Anforderungsprofil zum Erstellen der Szenarien-Bibliothek.

Des Weiteren umfasst das System eine erste Recheneinrichtung zum Vergleichen eines, eine Mehrzahl von Szenario-Elementen aufweisenden, weiteren Test-Szenario-Datensatzes mit der durch die Szenarien-Bibliothek umfassten Anzahl von Test-Szenario-Datensätzen und dem Anforderungsprofil zum Erstellen der Szenarien-Bibliothek.

Das System umfasst ferner eine zweite Recheneinrichtung zum Anwenden eines Algorithmus zum Clustern von Szenario-Elementen auf die durch die Szenarien-Bibliothek umfasste Anzahl von Test-Szenario-Datensätzen und den weiteren Test-Szenario-Datensatz.

Darüber hinaus umfasst das System eine dritte Recheneinrichtung zum Aufnehmen des weiteren Test-Szenario-Datensatzes in die Szenarien-Bibliothek oder Verwerfen des weiteren Test-Szenario-Datensatzes in Abhängigkeit eines Grades einer Übereinstimmung zumindest eines Clusters des weiteren Test-Szenario-Datensatzes mit den Szenario-Elementen des Anforderungsprofils und zumindest eines Clusters der durch die Szenarien-Bibliothek umfassten Anzahl von Test-Szenario-Datensätzen.

Szenarien können aus realen Messfahrten generiert werden oder manuell aufgebaut werden. Je nach Anwendungsfall sind dann unterschiedliche Aspekte in dem Szenario modelliert. Demnach besteht ein Szenario aus einer Straße mit unterschiedlichsten Eigenschaften, aus der Randbebauung, diversen statischen und dynamischen Objekten, die jeweils auch diverse Attribute beinhalten.

Eine Idee der vorliegenden Erfindung ist es, eine Szenarien-Bibliothek unter Verwendung von Test-Szenario-Datensätzen zu erstellen, welche eine optimale Testabdeckung der ODD-Taxonomie bzw. des Anforderungsprofils ermöglichen.

Das Anforderungsprofil ist dabei durch eine allgemeingültige Taxonomie der ODD gegeben. In diesem Zusammenhang kann beispielsweise ein Meta-Anforderungsprofil sowie eine Anzahl weiterer untergeordneter Anforderungsprofile erstellt werden.

Um dies zu erreichen, ist es von entscheidender Bedeutung, nach vorgegebenen Kriterien zu bestimmen, welche Test-Szenario-Datensätze in die Szenarien-Bibliothek aufzunehmen sind und welche nicht. Ein mögliches Kriterium ist beispielsweise die Bestimmung des Wertes eines Test-Szenario-Datensatzes in Abhängigkeit der bereits in der Szenarien-Bibliothek enthaltenen Test-Szenario-Datensätzen.

Um den Wert des potentiell in die Szenarien-Bibliothek aufzunehmenden Test-Szenario-Datensatzes zu bestimmen, ist es erforderlich, den potentiell in die Szenarien-Bibliothek aufzunehmenden Test-Szenario-Datensatz sowohl mit der ODD-Taxonomie als auch mit der Szenarien-Bibliothek zu vergleichen, d.h. zu bestimmen, ob der weitere Test-Szenario-Datensatz zum einen in der ODD-Taxonomie enthalten ist und zum anderen ob ein, ein vorgegebenes Ähnlichkeitsmaß aufweisender Test-Szenario-Datensatz bereits durch die Szenarien-Bibliothek umfasst ist oder nicht.

Auf Basis einer definierten ODD-Taxonomie und auf Basis von in der Szenarien-Bibliothek enthaltenen Clustern ähnlicher Test-Szenario-Datensätze kann somit in vorteilhafter Weise eine Vervollständigung der Szenarien-Bibliothek im Sinne der ODD-Taxonomie erreicht werden.

Das kriterienbasierte Erstellen der, virtuelle Fahrzeugumgebungen aufweisenden, Szenarien-Bibliothek zum Testen hochautomatisierter Fahrfunktionen eines Kraftfahrzeugs erfolgt dabei in Abhängigkeit einer Bestimmung eines Grades der Übereinstimmung des weiteren Test-Szenario-Datensatzes mit sowohl dem Anforderungsprofil also auch in der Szenarien-Bibliothek enthaltenen Clustern ähnlicher Test-Szenario-Datensätze.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung umfasst das Verfahren ferner, dass falls ein Grad der Übereinstimmung des weiteren Test-Szenario-Datensatzes mit den Szenario-Elementen des Anforderungsprofils größer oder gleich einem vorgegebenen ersten Schwellwert, insbesondere größer oder gleich 50%, ist und falls der Grad der Übereinstimmung des weiteren Test-Szenario-Datensatzes mit dem zumindest einen Cluster der durch die Szenarien-Bibliothek umfassten Anzahl von Test-Szenario-Datensätzen kleiner als ein zweiter Schwellwert, insbesondere kleiner als 50%, ist, der weitere Test-Szenario-Datensatz in die Szenarien-Bibliothek aufgenommen wird.

Der oben genannte erste Schwellwert und zweite Schwellwert können alternativ einen anderen Wert aufweisen. Die Schwellwerte können dabei durch eine Variable gesetzt werden, wobei in Abhängigkeit davon, wie viele Testszenario-Datensätze die Szenarien-Bibliothek umfassen soll und/oder welchen Ähnlichkeitsgrad der weitere Testszenario-Datensatz zum Anforderungsprofil aufweisen soll ein anderer Schwellwert definierbar ist.

Je geringer der erste Schwellwert, desto größer ist eine Wahrscheinlichkeit, dass ein gegebener weiterer Testszenario-Datensatz in die Szenarien-Bibliothek aufgenommen wird. Somit würde die Szenarien-Bibliothek insgesamt mehr Testszenario-Datensätze enthalten als bei einem höher definierten ersten Schwellwert.

Der weitere Testszenario-Datensatz erfüllt somit zum einen das Anforderungsprofil, indem der weitere Testszenario-Datensatz ein vorgegebenes Mindestähnlichkeitsmaß bzw. eine vorgegebene Ähnlichkeitsmetrik erfüllt und zum anderen in der Szenarien-Bibliothek bisher kein Testszenario-Datensatz enthalten ist, welcher ein vorgegebenes Mindestähnlichkeitsmaß bzw. eine vorgegebene Ähnlichkeitsmetrik erfüllt. Der weitere Testszenario-Datensatz weist somit einen, nach den vorstehend genannten Bedingungen bemessenen Wert auf, d.h. dieser wird als hinreichend wertvoll angesehen bzw. weist neuen Informationsgehalt auf, der eine Aufnahme in die Szenarien-Bibliothek rechtfertigt.

Gemäß einer weiteren bevorzugten Weiterbildung umfasst das Verfahren, dass falls der Grad der Übereinstimmung des weiteren Test-Szenario-Datensatzes mit den Szenario-Elementen des Anforderungsprofils größer oder gleich dem vorgegebenen ersten Schwellwert, insbesondere größer oder gleich 50%, ist und falls der Grad der Übereinstimmung des weiteren Test-Szenario-Datensatzes mit dem zumindest einen Cluster der durch die Szenarien-Bibliothek umfassten Anzahl von Test-Szenario-Datensätzen größer oder gleich dem zweiten Schwellwert, insbesondere größer oder gleich 50%, ist, der weitere Test-Szenario-Datensatz in die Szenarien-Bibliothek aufgenommen wird, falls die Anzahl von durch den zumindest einen Cluster der Szenarien-Bibliothek umfassten Test-Szenario-Datensätzen geringer als ein vorgegebener dritter Schwellwert ist.

Somit kann in vorteilhafter Weise aufgrund der vorstehend genannten mehrschichtigen Prüfung sichergestellt werden, dass selbst falls die Szenarien-Bibliothek bereits ähnliche Test-Szenario-Datensätze als den zu prüfenden weiteren Test-Szenario-Datensatz enthält, der weitere Test-Szenario-Datensatz auch dann die Szenarien-Bibliothek aufgenommen werden kann, falls diese Art von Test-Szenario-Datensatz in der Szenarien-Bibliothek aktuell unterrepräsentiert ist. Durch diesen zusätzlichen Prüfungsschritt kann damit erreicht werden, dass eine gewünschte Abdeckung des Anforderungsprofils durch eine ausreichende Anzahl von Test-Szenario-Datensätzen in der Szenarien-Bibliothek gewährleistet ist.

Gemäß einer weiteren bevorzugten Weiterbildung umfasst das Verfahren, dass der weitere Test-Szenario-Datensatz verworfen wird, falls die Anzahl von durch den zumindest einen Cluster der Szenarien-Bibliothek umfassten Test-Szenario-Datensätzen größer oder gleich dem vorgegebenen dritten Schwellwert ist.

Sofern die Szenarien-Bibliothek demnach bereits eine ausreichende Anzahl von Test-Szenario-Datensätzen dieser Art, d.h. welche eine vorgegebene Ähnlichkeit zu dem weiteren Test-Szenario-Datensatz aufweisen, enthält, kann der weitere Test-Szenario-Datensatz verworfen werden, da die Szenarien-Bibliothek bereits die gewünschte Abdeckung des Anforderungsprofils aufweist.

Gemäß einer weiteren bevorzugten Weiterbildung umfasst das Verfahren, dass falls die Anzahl von durch den zumindest einen Cluster der Szenarien-Bibliothek umfassten Test-Szenario-Datensätzen größer oder gleich dem dritten Schwellwert ist eine Anzahl von in den jeweiligen durch den zumindest einen Cluster der Szenarien-Bibliothek umfassten Test-Szenario-Datensätzen enthaltenen Szenario-Elementen bestimmt wird, wobei falls die Anzahl der in den jeweiligen durch den zumindest einen Cluster der Szenarien-Bibliothek umfassten Test-Szenario-Datensätzen enthaltenen Szenario-Elementen geringer als in dem weiteren Test-Szenario-Datensatz enthaltenen Szenario-Elementen ist, der weitere Test-Szenario-Datensatz in die Szenarien-Bibliothek aufgenommen wird.

Die Prüfung, ob der weitere Test-Szenario-Datensatz in die Szenarien-Bibliothek aufgenommen wird, erfolgt somit zum einen auf der Ebene der Anzahl von durch die Szenarien-Bibliothek umfassten Test-Szenario-Datensätzen und zum anderen auf der Ebene der durch die in der Szenarien-Bibliothek enthaltenen Test-Szenario-Datensätzen umfassten Szenario-Elementen. Dieser zusätzliche Prüfungsschritt ermöglicht somit in vorteilhafter Weise eine Optimierung der Abdeckung des Anforderungsprofils in der Szenarien-Bibliothek, da somit ebenfalls der Fall erfasst wird, dass die Szenarien-Bibliothek zwar eine gewünschte Anzahl von Test-Szenario-Datensätzen eines bestimmten Clusters enthält, jedoch die Test-Szenario-Datensätze eine nur unzureichende Anzahl von Szenario-Elementen aufweisen. In diesem Fall kann damit in vorteilhafter Weise die gewünschte Abdeckung des Anforderungsprofils durch Aufnahme des weiteren Test-Szenario-Datensatzes in die Szenarien-Bibliothek erreicht werden.

Gemäß einer weiteren bevorzugten Weiterbildung umfasst das Verfahren, dass falls die Anzahl von in den jeweiligen durch den zumindest einen Cluster der Szenarien-Bibliothek umfassten Test-Szenario-Datensätzen enthaltenen Szenario-Elementen größer oder gleich als in dem weiteren Test-Szenario-Datensatz enthaltenen Szenario-Elementen ist, der weitere Test-Szenario-Datensatz verworfen wird.

Sofern die Szenarien-Bibliothek demnach bereits eine ausreichende Anzahl von Test-Szenario-Datensätzen als auch Szenario-Elementen dieser Art, d.h. welche eine vorgegebene Ähnlichkeit zu dem weiteren Test-Szenario-Datensatz aufweisen, enthält, kann der weitere Test-Szenario-Datensatz verworfen werden, da die Szenarien-Bibliothek bereits die gewünschte Abdeckung des Anforderungsprofils aufweist.

Gemäß einer weiteren bevorzugten Weiterbildung umfasst das Verfahren, dass falls sich eine Kombination der in dem weiteren Test-Szenario-Datensatz enthaltenen Szenario-Elementen von einer Kombination der durch den zumindest einen Cluster der Szenarien-Bibliothek umfassten Test-Szenario-Datensätzen enthaltenen Szenario-Elementen unterscheidet, der weitere Test-Szenario-Datensatz in die Szenarien-Bibliothek aufgenommen wird.

Die Prüfung, ob der weitere Test-Szenario-Datensatz in die Szenarien-Bibliothek aufgenommen wird, erfolgt somit zusätzlich zu den vorstehend genannten Prüfungsschritten, d.h. erstens auf der Ebene der Anzahl von durch die Szenarien-Bibliothek umfassten Test-Szenario-Datensätzen und zweitens auf der Ebene der durch die in der Szenarien-Bibliothek enthaltenen Test-Szenario-Datensätzen umfassten Szenario-Elementen daher ebenfalls drittens auf der Ebene der spezifischen Kombination der in dem weiteren Test-Szenario-Datensatz enthaltenen Szenario-Elementen im Vergleich zu einer Kombination der durch den zumindest einen Cluster der Szenarien-Bibliothek umfassten Test-Szenario-Datensätzen.

Dieser zusätzliche Prüfungsschritt ermöglicht somit in vorteilhafter Weise eine Optimierung der Abdeckung des Anforderungsprofils in der Szenarien-Bibliothek, da somit ebenfalls der Fall erfasst wird, dass die spezifische Kombination der in dem weiteren Test-Szenario-Datensatz enthaltenen Szenario-Elementen von der Kombination der durch den zumindest einen Cluster der Szenarien-Bibliothek umfassten Test-Szenario-Datensätzen abweicht. In diesem Fall kann damit in vorteilhafter Weise die gewünschte Abdeckung des Anforderungsprofils durch Aufnahme des weiteren Test-Szenario-Datensatzes in die Szenarien-Bibliothek erreicht werden.

Gemäß einer weiteren bevorzugten Weiterbildung umfasst das Verfahren, dass falls eine Kombination der in dem weiteren Test-Szenario-Datensatz enthaltenen Szenario-Elementen durch die durch den zumindest einen Cluster der Szenarien-Bibliothek umfassten Test-Szenario-Datensätzen enthaltenen Szenario-Elemente umfasst ist, der weitere Test-Szenario-Datensatz verworfen wird.

Sofern die Szenarien-Bibliothek demnach bereits eine ausreichende Anzahl von Test-Szenario-Datensätzen, Szenario-Elementen und Kombination von Szenario-Elementen, d.h. welche eine vorgegebene Ähnlichkeit zu dem weiteren Test-Szenario-Datensatz aufweisen, enthält, kann der weitere Test-Szenario-Datensatz verworfen werden, da die Szenarien-Bibliothek bereits die gewünschte Abdeckung des Anforderungsprofils aufweist.

Gemäß einer weiteren bevorzugten Weiterbildung umfasst das Verfahren, dass falls der weitere Test-Szenario-Datensatz einen gemäß einer vorgegebenen Ähnlichkeitsmetrik geringen Grad der Übereinstimmung, insbesondere kleiner als 50%, mit den Szenario-Elementen des Anforderungsprofils aufweist, das Anforderungsprofil um die bisher nicht umfassten Szenario-Elemente erweitert wird. Somit besteht in vorteilhafter Weise ebenfalls die Möglichkeit, das Anforderungsprofil entsprechend abzuändern, um weitere sinnvolle Testszenarien aufzunehmen.

Gemäß einer weiteren bevorzugten Weiterbildung umfasst das Verfahren, dass der Grad der Übereinstimmung zumindest eines Clusters des weiteren Test-Szenario-Datensatzes mit den Szenario-Elementen des Anforderungsprofils durch Bestimmen einer Überlappung zwischen dem zumindest einen Cluster des weiteren Test-Szenario-Datensatzes, den Szenario-Elementen des Anforderungsprofils und/oder dem zumindest einen Cluster der durch die Szenarien-Bibliothek umfassten Anzahl von Test-Szenario-Datensätzen durchgeführt wird.

Somit kann in vorteilhafter Weise eine Überlappung zwischen dem weiteren Test-Szenario-Datensatz, den Szenario-Elementen des Anforderungsprofils und/oder der Szenarien-Bibliothek festgestellt und daraus der Grad der Übereinstimmung bestimmt werden.

Gemäß einer weiteren bevorzugten Weiterbildung umfasst das Verfahren, dass falls der weitere Test-Szenario-Datensatz mit den Szenario-Elementen des Anforderungsprofils vollständig übereinstimmt, eine Anzahl übereinstimmender Cluster des weiteren Test-Szenario-Datensatzes mit dem zumindest einen Cluster der durch die Szenarien-Bibliothek umfassten Anzahl von Test-Szenario-Datensätzen durch Anpassen zumindest eines Filterkriteriums modifizierbar ist, welches eine maximale Anzahl zu bestimmender, übereinstimmender Cluster vorgibt.

Durch die Modifizierbarkeit des Filterkriteriums zur Änderung der Bestimmung der Anzahl übereinstimmender Cluster kann in vorteilhafter Weise eine genauere Clusterzuordnung des weiteren Test-Szenario-Datensatzes zu spezifischen Clustern der Szenarien-Bibliothek ermöglicht werden.

Gemäß einer weiteren bevorzugten Weiterbildung umfasst das Verfahren, dass zum Testen eines durch das Anforderungsprofil umfassten Szenario-Elements die in der Szenarien-Bibliothek enthaltene Anzahl von Test-Szenario-Datensätzen durch den Algorithmus geclustert wird, wobei basierend auf den identifizierten Clustern ein das Szenario-Element aufweisender Test-Szenario-Datensatz ausgewählt wird. Somit können die durch das Anforderungsprofil umfassten Szenario-Elemente clusterabhängig getestet werden.

Gemäß einer weiteren bevorzugten Weiterbildung umfasst das Verfahren, dass basierend auf dem ausgewählten, eine virtuelle Fahrzeugumgebung aufweisenden, Test-Szenario-Datensatz ein Test hochautomatisierter Fahrfunktionen des Kraftfahrzeugs durchgeführt wird.

Somit kann die hochautomatisierte Fahrfunktionen des Kraftfahrzeugs entsprechend dem Anforderungsprofil in einer Vielzahl unterschiedlicher Verkehrssituationen gemäß den in der Szenarien-Bibliothek vorhandenen Test-Szenario-Datensätzen umfassend getestet werden.

Gemäß einer weiteren bevorzugten Weiterbildung umfasst das Verfahren, dass der Test-Szenario-Datensatz und/oder der weitere Test-Szenario-Datensatz annotierte Szenario-Elemente aufweist und basierend auf realen oder virtuell erzeugten Messdaten, insbesondere Sensordaten, erstellt ist. Der Test-Szenario-Datensatz weist aufgrund der Annotierung somit in vorteilhafter Weise eine hohe Genauigkeit in Bezug auf die Szenario-Elemente auf.

Die hierin beschriebenen Merkmale des Verfahrens sind ebenfalls auf andere virtuelle Umgebungen wie beispielsweise das Testen anderer Fahrzeugarten in verschiedenen Umgebungen anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum kriterienbasierten Erstellen einer, virtuelle Fahrzeugumgebungen aufweisenden, Szenarien-Bibliothek zum Testen hochautomatisierter Fahrfunktionen eines Kraftfahrzeugs gemäß einer bevorzugten Ausführungsform der Erfindung; und
- Fig. 2: ein Diagramm eines Systems zum kriterienbasierten Erstellen einer, virtuelle Fahrzeugumgebungen aufweisenden, Szenarien-Bibliothek zum Testen hochautomatisierter Fahrfunktionen eines Kraftfahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

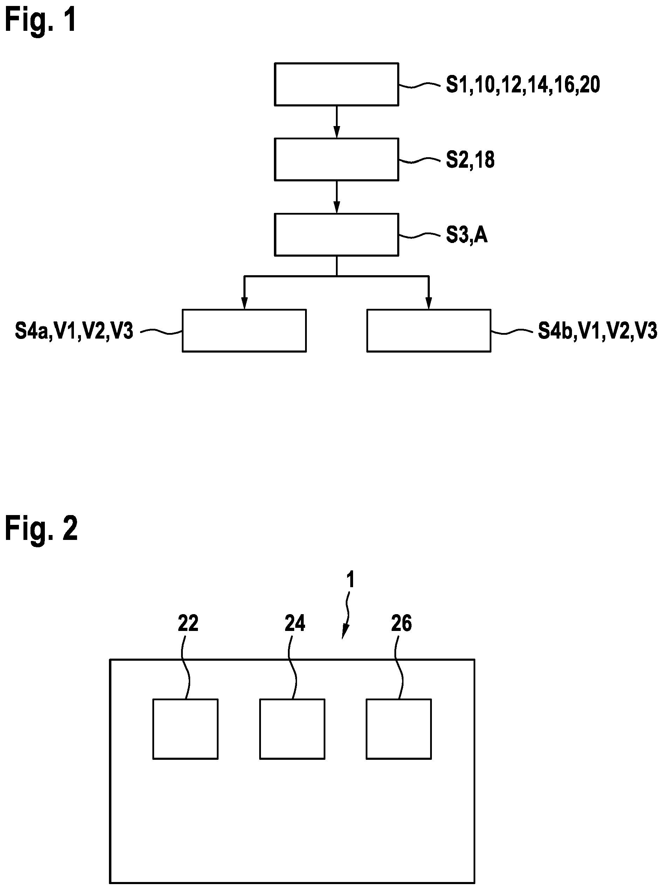

Fig. 1 zeigt ein Ablaufdiagramm eines Verfahrens zum kriterienbasierten Erstellen einer, virtuelle Fahrzeugumgebungen aufweisenden, Szenarien-Bibliothek 10 zum Testen hochautomatisierter Fahrfunktionen eines Kraftfahrzeugs.

Das Verfahren umfasst ein Bereitstellen S1 einer, eine Anzahl von Test-Szenario-Datensätzen 12 aufweisenden Szenarien-Bibliothek 10 und eines Szenario-Elemente 14 aufweisenden Anforderungsprofils 16 zum Erstellen der Szenarien-Bibliothek 10.

Des Weiteren umfasst das Verfahren ein Vergleichen S2 eines, eine Mehrzahl von Szenario-Elementen 14 aufweisenden, weiteren Test-Szenario-Datensatzes 18 mit zumindest einem Cluster der durch die Szenarien-Bibliothek 10 umfassten Anzahl von Test-Szenario-Datensätzen 12 und dem Anforderungsprofil 16 zum Erstellen der Szenarien-Bibliothek 10, wobei der Vergleich ein Anwenden S3 eines Algorithmus A zum Clustern von Szenario-Elementen 14 auf die durch die Szenarien-Bibliothek 10 umfasste Anzahl von Test-Szenario-Datensätzen 12 und den weiteren Test-Szenario-Datensatz 18 aufweist.

Darüber hinaus umfasst das Verfahren ein Aufnehmen S4a des weiteren Test-Szenario-Datensatzes 18 in die Szenarien-Bibliothek 10 oder Verwerfen S4b des weiteren Test-Szenario-Datensatzes 18 in Abhängigkeit eines Grades einer Übereinstimmung des zumindest einen Clusters des weiteren Test-Szenario-Datensatzes 18 mit den Szenario-Elementen 14 des Anforderungsprofils 16 und dem zumindest einem Cluster der durch die Szenarien-Bibliothek 10 umfassten Anzahl von Test-Szenario-Datensätzen 12.

Falls ein Grad der Übereinstimmung des weiteren Test-Szenario-Datensatzes 18 mit den Szenario-Elementen 14 des Anforderungsprofils 16 größer oder gleich einem vorgegebenen ersten Schwellwert V1, insbesondere größer oder gleich 50%, ist und falls der Grad der Übereinstimmung des weiteren Test-Szenario-Datensatzes 18 mit dem zumindest einen Cluster der durch die Szenarien-Bibliothek 10 umfassten Anzahl von Test-Szenario-Datensätzen 12 kleiner als ein zweiter Schwellwert V2, insbesondere kleiner als 50%, ist, wird der weitere Test-Szenario-Datensatz 12 in die Szenarien-Bibliothek 10 aufgenommen.

Falls der Grad der Übereinstimmung des weiteren Test-Szenario-Datensatzes 18 mit den Szenario-Elementen 14 des Anforderungsprofils 16 größer oder gleich dem vorgegebenen ersten Schwellwert V1, insbesondere größer oder gleich 50%, ist und falls der Grad der Übereinstimmung des weiteren Test-Szenario-Datensatzes 18 mit dem zumindest einen Cluster der durch die Szenarien-Bibliothek 10 umfassten Anzahl von Test-Szenario-Datensätzen 12 größer oder gleich dem zweiten Schwellwert V2, insbesondere größer oder gleich 50%, ist, wird der weitere Test-Szenario-Datensatz 12 in die Szenarien-Bibliothek 10 aufgenommen, falls die Anzahl von durch den zumindest einen Cluster der Szenarien-Bibliothek 10 umfassten Test-Szenario-Datensätzen 12 geringer als ein vorgegebener dritter Schwellwert V3 ist.

Der weitere Test-Szenario-Datensatz 12 wird verworfen, falls die Anzahl von durch den zumindest einen Cluster der Szenarien-Bibliothek 10 umfassten Test-Szenario-Datensätzen 12 größer oder gleich dem vorgegebenen dritten Schwellwert V3 ist.

Falls die Anzahl von durch den zumindest einen Cluster der Szenarien-Bibliothek 10 umfassten Test-Szenario-Datensätzen 12 größer oder gleich dem dritten Schwellwert V3 ist wird eine Anzahl von in den jeweiligen durch den zumindest einen Cluster der Szenarien-Bibliothek 10 umfassten Test-Szenario-Datensätzen 12 enthaltenen Szenario-Elementen 14 bestimmt.

Falls ferner die Anzahl der in den jeweiligen durch den zumindest einen Cluster der Szenarien-Bibliothek 10 umfassten Test-Szenario-Datensätzen 12 enthaltenen Szenario-Elementen 14 geringer als in dem weiteren Test-Szenario-Datensatz 18 enthaltenen Szenario-Elementen 14 ist, wird der weitere Test-Szenario-Datensatz 12 in die Szenarien-Bibliothek 10 aufgenommen.

Des Weiteren wird alternativ, falls die Anzahl von in den jeweiligen durch den zumindest einen Cluster der Szenarien-Bibliothek 10 umfassten Test-Szenario-Datensätzen 12 enthaltenen Szenario-Elementen 14 größer oder gleich als in dem weiteren Test-Szenario-Datensatz 18 enthaltenen Szenario-Elementen 14 ist, der weitere Test-Szenario-Datensatz 12 verworfen.

Falls sich eine Kombination der in dem weiteren Test-Szenario-Datensatz 18 enthaltenen Szenario-Elementen 14 von einer Kombination der durch den zumindest einen Cluster der Szenarien-Bibliothek 10 umfassten Test-Szenario-Datensätzen 12 enthaltenen Szenario-Elementen 14 unterscheidet, wird der weitere Test-Szenario-Datensatz 12 in die Szenarien-Bibliothek 10 aufgenommen.

Falls eine Kombination der in dem weiteren Test-Szenario-Datensatz 18 enthaltenen Szenario-Elementen 14 durch die durch den zumindest einen Cluster der Szenarien-Bibliothek 10 umfassten Test-Szenario-Datensätzen 12 enthaltenen Szenario-Elemente 14 umfasst ist, wird der weitere Test-Szenario-Datensatz 12 verworfen.

Darüber hinaus wird alternativ, falls der weitere Test-Szenario-Datensatz 12 einen gemäß einer vorgegebenen Ähnlichkeitsmetrik geringen Grad der Übereinstimmung, insbesondere kleiner als 50%, mit den Szenario-Elementen 14 des Anforderungsprofils 16 aufweist, das Anforderungsprofil 16 um die bisher nicht umfassten Szenario-Elemente 14 erweitert.

Der Grad der Übereinstimmung zumindest eines Clusters des weiteren Test-Szenario-Datensatzes 18 mit den Szenario-Elementen 14 des Anforderungsprofils 16 wird durch Bestimmen einer Überlappung zwischen dem zumindest einen Cluster des weiteren Test-Szenario-Datensatzes 18, den Szenario-Elementen 14 des Anforderungsprofils 16 und/oder dem zumindest einen Cluster der durch die Szenarien-Bibliothek 10 umfassten Anzahl von Test-Szenario-Datensätzen 12 durchgeführt.

Falls der weitere Test-Szenario-Datensatz 12 mit den Szenario-Elementen 14 des Anforderungsprofils 16 vollständig übereinstimmt, ist eine Anzahl übereinstimmender Cluster des weiteren Test-Szenario-Datensatzes 18 mit dem zumindest einen Cluster der durch die Szenarien-Bibliothek 10 umfassten Anzahl von Test-Szenario-Datensätzen 12 durch Anpassen zumindest eines Filterkriteriums modifizierbar, welches eine maximale Anzahl zu bestimmender, übereinstimmender Cluster vorgibt.

Zum Testen eines durch das Anforderungsprofil 16 umfassten Szenario-Elements 14 wird die in der Szenarien-Bibliothek 10 enthaltene Anzahl von Test-Szenario-Datensätzen 12 durch den Algorithmus A geclustert, wobei basierend auf den identifizierten Clustern ein das Szenario-Element 14 aufweisender Test-Szenario-Datensatz 12 ausgewählt wird.

Basierend auf dem ausgewählten, eine virtuelle Fahrzeugumgebung aufweisenden, Test-Szenario-Datensatz 12 wird ferner ein Test hochautomatisierter Fahrfunktionen des Kraftfahrzeugs durchgeführt.

Der Test-Szenario-Datensatz 12 und/oder der weitere Test-Szenario-Datensatz 12 weist annotierte Szenario-Elemente 14 auf und ist basierend auf realen oder virtuell erzeugten Messdaten 20, insbesondere Sensordaten, erstellt.

Fig. 2 zeigt ein Diagramm eines Systems 1 zum kriterienbasierten Erstellen einer, virtuelle Fahrzeugumgebungen aufweisenden, Szenarien-Bibliothek 10 zum Testen hochautomatisierter Fahrfunktionen eines Kraftfahrzeugs gemäß der bevorzugten Ausführungsform der Erfindung.

Das System 1 umfasst eine, eine Anzahl von Test-Szenario-Datensätzen 12 aufweisende Szenarien-Bibliothek 10 und ein Szenario-Elemente 14 aufweisendes Anforderungsprofil 16 zum Erstellen der Szenarien-Bibliothek 10.

Des Weiteren umfasst das System 1 eine erste Recheneinrichtung 22 zum Vergleichen eines, eine Mehrzahl von Szenario-Elementen 14 aufweisenden, weiteren Test-Szenario-Datensatzes 18 mit der durch die Szenarien-Bibliothek 10 umfassten Anzahl von Test-Szenario-Datensätzen 12 und dem Anforderungsprofil 16 zum Erstellen der Szenarien-Bibliothek 10.

Das System 1 umfasst ferner eine zweite Recheneinrichtung 24 zum Anwenden eines Algorithmus A zum Clustern von Szenario-Elementen 14 auf die durch die Szenarien-Bibliothek 10 umfasste Anzahl von Test-Szenario-Datensätzen 12 und den weiteren Test-Szenario-Datensatz 18.

Darüber hinaus umfasst das System 1 eine dritte Recheneinrichtung 26 zum Aufnehmen des weiteren Test-Szenario-Datensatzes 18 in die Szenarien-Bibliothek 10 oder Verwerfen des weiteren Test-Szenario-Datensatzes 18 in Abhängigkeit eines Grades einer Übereinstimmung zumindest eines Clusters des weiteren Test-Szenario-Datensatzes 18 mit den Szenario-Elementen 14 des Anforderungsprofils 16 und zumindest eines Clusters der durch die Szenarien-Bibliothek 10 umfassten Anzahl von Test-Szenario-Datensätzen 12.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken. Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

## Patentansprüche

1. Computerimplementiertes Verfahren zum kriterienbasierten Erstellen einer, virtuelle Fahrzeugumgebungen aufweisenden, Szenarien-Bibliothek (10) zum Testen hochautomatisierter Fahrfunktionen eines Kraftfahrzeugs, mit den Schritten:
Bereitstellen (S1) einer, eine Anzahl von Test-Szenario-Datensätzen (12) aufweisenden Szenarien-Bibliothek (10) und eines Szenario-Elemente (14) aufweisenden Anforderungsprofils (16) zum Erstellen der Szenarien-Bibliothek (10);
Vergleichen (S2) eines, eine Mehrzahl von Szenario-Elementen (14) aufweisenden, weiteren Test-Szenario-Datensatzes (18) mit zumindest einem Cluster der durch die Szenarien-Bibliothek (10) umfassten Anzahl von Test-Szenario-Datensätzen (12) und dem Anforderungsprofil (16) zum Erstellen der Szenarien-Bibliothek (10), wobei der Vergleich ein Anwenden (S3) eines Algorithmus (A) zum Clustern von Szenario-Elementen (14) auf die durch die Szenarien-Bibliothek (10) umfasste Anzahl von Test-Szenario-Datensätzen (12) und den weiteren Test-Szenario-Datensatz (18) aufweist; und
Aufnehmen (S4a) des weiteren Test-Szenario-Datensatzes (18) in die Szenarien-Bibliothek (10) oder Verwerfen (S4b) des weiteren Test-Szenario-Datensatzes (18) in Abhängigkeit eines Grades einer Übereinstimmung des zumindest einen Clusters des weiteren Test-Szenario-Datensatzes (18) mit den Szenario-Elementen (14) des Anforderungsprofils (16) und dem zumindest einem Cluster der durch die Szenarien-Bibliothek (10) umfassten Anzahl von Test-Szenario-Datensätzen (12).

2. Computerimplementiertes Verfahren nach Anspruch 1, wobei falls ein Grad der Übereinstimmung des weiteren Test-Szenario-Datensatzes (18) mit den Szenario-Elementen (14) des Anforderungsprofils (16) größer oder gleich einem vorgegebenen ersten Schwellwert (V1), insbesondere größer oder gleich 50%, ist und falls der Grad der Übereinstimmung des weiteren Test-Szenario-Datensatzes (18) mit dem zumindest einen Cluster der durch die Szenarien-Bibliothek (10) umfassten Anzahl von Test-Szenario-Datensätzen (12) kleiner als ein zweiter Schwellwert (V2), insbesondere kleiner als 50%, ist, der weitere Test-Szenario-Datensatz (12) in die Szenarien-Bibliothek (10) aufgenommen wird.

3. Computerimplementiertes Verfahren nach Anspruch 2, wobei falls der Grad der Übereinstimmung des weiteren Test-Szenario-Datensatzes (18) mit den Szenario-Elementen (14) des Anforderungsprofils (16) größer oder gleich dem vorgegebenen ersten Schwellwert (V1), insbesondere größer oder gleich 50%, ist und falls der Grad der Übereinstimmung des weiteren Test-Szenario-Datensatzes (18) mit dem zumindest einen Cluster der durch die Szenarien-Bibliothek (10) umfassten Anzahl von Test-Szenario-Datensätzen (12) größer oder gleich dem zweiten Schwellwert (V2), insbesondere größer oder gleich 50%, ist, der weitere Test-Szenario-Datensatz (12) in die Szenarien-Bibliothek (10) aufgenommen wird, falls die Anzahl von durch den zumindest einen Cluster der Szenarien-Bibliothek (10) umfassten Test-Szenario-Datensätzen (12) geringer als ein vorgegebener dritter Schwellwert (V3) ist.

4. Computerimplementiertes Verfahren nach Anspruch 3, wobei der weitere Test-Szenario-Datensatz (12) verworfen wird, falls die Anzahl von durch den zumindest einen Cluster der Szenarien-Bibliothek (10) umfassten Test-Szenario-Datensätzen (12) größer oder gleich dem vorgegebenen dritten Schwellwert (V3) ist.

5. Computerimplementiertes Verfahren nach Anspruch 3, wobei falls die Anzahl von durch den zumindest einen Cluster der Szenarien-Bibliothek (10) umfassten Test-Szenario-Datensätzen (12) größer oder gleich dem dritten Schwellwert (V3) ist eine Anzahl von in den jeweiligen durch den zumindest einen Cluster der Szenarien-Bibliothek (10) umfassten Test-Szenario-Datensätzen (12) enthaltenen Szenario-Elementen (14) bestimmt wird, wobei falls die Anzahl der in den jeweiligen durch den zumindest einen Cluster der Szenarien-Bibliothek (10) umfassten Test-Szenario-Datensätzen (12) enthaltenen Szenario-Elementen (14) geringer als in dem weiteren Test-Szenario-Datensatz (18) enthaltenen Szenario-Elementen (14) ist, der weitere Test-Szenario-Datensatz (12) in die Szenarien-Bibliothek (10) aufgenommen wird.

6. Computerimplementiertes Verfahren nach Anspruch 5, wobei falls die Anzahl von in den jeweiligen durch den zumindest einen Cluster der Szenarien-Bibliothek (10) umfassten Test-Szenario-Datensätzen (12) enthaltenen Szenario-Elementen (14) größer oder gleich als in dem weiteren Test-Szenario-Datensatz (18) enthaltenen Szenario-Elementen (14) ist, der weitere Test-Szenario-Datensatz (12) verworfen wird.

7. Computerimplementiertes Verfahren nach einem der vorhergehenden Ansprüche, wobei falls sich eine Kombination der in dem weiteren Test-Szenario-Datensatz (18) enthaltenen Szenario-Elementen (14) von einer Kombination der durch den zumindest einen Cluster der Szenarien-Bibliothek (10) umfassten Test-Szenario-Datensätzen (12) enthaltenen Szenario-Elementen (14) unterscheidet, der weitere Test-Szenario-Datensatz (12) in die Szenarien-Bibliothek (10) aufgenommen wird.

8. Computerimplementiertes Verfahren nach einem der vorhergehenden Ansprüche, wobei falls eine Kombination der in dem weiteren Test-Szenario-Datensatz (18) enthaltenen Szenario-Elementen (14) durch die durch den zumindest einen Cluster der Szenarien-Bibliothek (10) umfassten Test-Szenario-Datensätzen (12) enthaltenen Szenario-Elemente (14) umfasst ist, der weitere Test-Szenario-Datensatz (12) verworfen wird.

9. Computerimplementiertes Verfahren nach einem der vorhergehenden Ansprüche, wobei falls der weitere Test-Szenario-Datensatz (12) einen gemäß einer vorgegebenen Ähnlichkeitsmetrik geringen Grad der Übereinstimmung, insbesondere kleiner als 50%, mit den Szenario-Elementen (14) des Anforderungsprofils (16) aufweist, das Anforderungsprofil (16) um die bisher nicht umfassten Szenario-Elemente (14) erweitert wird.

10. Computerimplementiertes Verfahren nach einem der vorhergehenden Ansprüche, wobei der Grad der Übereinstimmung zumindest eines Clusters des weiteren Test-Szenario-Datensatzes (18) mit den Szenario-Elementen (14) des Anforderungsprofils (16) durch Bestimmen einer Überlappung zwischen dem zumindest einen Cluster des weiteren Test-Szenario-Datensatzes (18), den Szenario-Elementen (14) des Anforderungsprofils (16) und/oder dem zumindest einen Cluster der durch die Szenarien-Bibliothek (10) umfassten Anzahl von Test-Szenario-Datensätzen (12) durchgeführt wird.

11. Computerimplementiertes Verfahren nach einem der vorhergehenden Ansprüche, wobei falls der weitere Test-Szenario-Datensatz (12) mit den Szenario-Elementen (14) des Anforderungsprofils (16) vollständig übereinstimmt, eine Anzahl übereinstimmender Cluster des weiteren Test-Szenario-Datensatzes (18) mit dem zumindest einen Cluster der durch die Szenarien-Bibliothek (10) umfassten Anzahl von Test-Szenario-Datensätzen (12) durch Anpassen zumindest eines Filterkriteriums modifizierbar ist, welches eine maximale Anzahl zu bestimmender, übereinstimmender Cluster vorgibt.

12. Computerimplementiertes Verfahren nach einem der vorhergehenden Ansprüche, wobei zum Testen eines durch das Anforderungsprofil (16) umfassten Szenario-Elements (14) die in der Szenarien-Bibliothek (10) enthaltene Anzahl von Test-Szenario-Datensätzen (12) durch den Algorithmus (A) geclustert wird, wobei basierend auf den identifizierten Clustern ein das Szenario-Element (14) aufweisender Test-Szenario-Datensatz (12) ausgewählt wird.

13. Computerimplementiertes Verfahren nach einem der vorhergehenden Anspruch 12, wobei basierend auf dem ausgewählten, eine virtuelle Fahrzeugumgebung aufweisenden, Test-Szenario-Datensatz (12) ein Test hochautomatisierter Fahrfunktionen des Kraftfahrzeugs durchgeführt wird.

14. Computerimplementiertes Verfahren nach einem der vorhergehenden Ansprüche, wobei der Test-Szenario-Datensatz (12) und/oder der weitere Test-Szenario-Datensatz (12) annotierte Szenario-Elemente (14) aufweist und basierend auf realen oder virtuell erzeugten Messdaten (20), insbesondere Sensordaten, erstellt ist.

15. System (1) zum kriterienbasierten Erstellen einer, virtuelle Fahrzeugumgebungen aufweisenden, Szenarien-Bibliothek (10) zum Testen hochautomatisierter Fahrfunktionen eines Kraftfahrzeugs, mit:
einer, eine Anzahl von Test-Szenario-Datensätzen (12) aufweisenden Szenarien-Bibliothek (10) und einem Szenario-Elemente (14) aufweisenden Anforderungsprofil (16) zum Erstellen der Szenarien-Bibliothek (10);
einer ersten Recheneinrichtung (22) zum Vergleichen eines, eine Mehrzahl von Szenario-Elementen (14) aufweisenden, weiteren Test-Szenario-Datensatzes (18) mit der durch die Szenarien-Bibliothek (10) umfassten Anzahl von Test-Szenario-Datensätzen (12) und dem Anforderungsprofil (16) zum Erstellen der Szenarien-Bibliothek (10),
einer zweiten Recheneinrichtung (24) zum Anwenden eines Algorithmus (A) zum Clustern von Szenario-Elementen (14) auf die durch die Szenarien-Bibliothek (10) umfasste Anzahl von Test-Szenario-Datensätzen (12) und den weiteren Test-Szenario-Datensatz (18); und
einer dritten Recheneinrichtung (26) zum Aufnehmen des weiteren Test-Szenario-Datensatzes (18) in die Szenarien-Bibliothek (10) oder Verwerfen des weiteren Test-Szenario-Datensatzes (18) in Abhängigkeit eines Grades einer Übereinstimmung zumindest eines Clusters des weiteren Test-Szenario-Datensatzes (18) mit den Szenario-Elementen (14) des Anforderungsprofils (16) und zumindest eines Clusters der durch die Szenarien-Bibliothek (10) umfassten Anzahl von Test-Szenario-Datensätzen (12).
